Europäisches Patentamt

(19) European Patent Office

Office européen des brevets

(11) Publication number: **0 174 870**
**B1**

(12) **EUROPEAN PATENT SPECIFICATION**

(45) Date of publication of patent specification: **28.11.90**

(21) Application number: **85306534.0**

(22) Date of filing: **13.09.85**

(51) Int. Cl.⁵: **H 02 K 23/54,** H 02 K 15/04, H 02 K 15/08, H 02 K 3/00

(54) Flat coil dynamoelectric device, preform therefor, and method and apparatus for use in their manufacture.

(30) Priority: **13.09.84 US 650407**
**13.09.84 US 650409**

(43) Date of publication of application:
**19.03.86 Bulletin 86/12**

(45) Publication of the grant of the patent:
**28.11.90 Bulletin 90/48**

(84) Designated Contracting States:
**DE FR GB IT**

(56) References cited:
**FR-A-1 283 290**
**US-A-3 906 622**
**US-A-4 335 856**

(73) Proprietor: **GLOBE PRODUCTS INC.**
**5051 Kitridge Road**
**Dayton, Ohio 45424 (US)**

(72) Inventor: **Finegold, Hyman Bernard**
**278 Burgess Avenue**
**Dayton Ohio 45415 (US)**
Inventor: **Dolgas, Patrick A.**
**5852 Hunters Court**
**Milford Ohio 45150 (US)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

This invention relates to a flat coil dynamoelectric device. It also related to a preform, method of manufacture and apparatus for use in the manufacture of such a device. The invention is particularly, but not exclusively concerned with a discoidal armature of the type comprising plural, flat coils wound from insulated wire, the armature having a thin-walled, flat annular active coil section surrounding a center structure including a commutator to which the several coils are connected. However, the invention is not necessarily so limited. For example, certain aspects of the invention could apply to the manufacture of dynamoelectric devices, such as field members, which do not include a commutator.

Many approaches have been used to manufacture flat coil dynamoelectric devices, but the known techniques require the use of time-consuming and expensive manual steps and/or the use of elaborate and extensive equipment for winding and thereafter handling the coils as needed to form the completed devices.

In EP—A—0 072 538, for example, there is described a machine for winding an armature coil for a flat motor, wherein a turntable supports indexing tables which mount rotary discs equipped with two concentric arrays of pins around which a continuous length wire coated with insulating material is wound in coils of heptagonal form by a winding jig. On completion of coil winding an electric current is passed through the wire to heat and melt the insulating coating and hence following cooling join the crossing wire portions by melt adhesion to set the coils in shape. The completed flat coil is then ejected from the winding disc and pins.

The invention aims to simplify and thereby reduce the cost of manufacturing flat coil dynamoelectric devices. Provided in accordance with one aspect of the invention is a preform for a flat coil dynamoelectric device, comprising an outer ring structure having a self-supporting shape and being substantially symmetrical about a center axis, an inner ring structure substantially symmetrical about said center axis located coaxially within said outer ring structure and having a self-supporting shape, the inner and outer ring structures having substantially coplaner first end surfaces, and plural coils of wire wound on said ring structures, said coils having sides extending generally radially of the ring structures and lying against and spanning between said first end surfaces thereof, and end turns extending generally circumferentially of said ring structures.

The coils can be wound under sufficient tension, and the frame members built to withstand such tension, that the completed preform comprises a self-supporting body which may be handled by automatic materials handling equipment in essentially the same manner it would be handled if it were a solid piece. Upon completion of the preform, it is preferably encapsulated in a matrix of resinous material to form the completed dynamoelectric device.

In the case of a flat coil armature a commutator body is located within the bore of the inner ring structure.

Appropriate connections of the coil terminal wire portions to tangs extending from the commutator body can be made before, during, and after the coils are wound. The commutator body is securely mounted within the bore of the inner ring structure and the coils are wound under sufficient tension that the wound assembly (termed an "armature preform") of the preform frame and the commutator have a self-supporting shape. The preform may, accordingly, be handled by automatic materials handling equipment there being no loose coils or wire leads requiring attention.

The invention also provides a method of manufacturing a preform for a flat disc armature, comprising the steps of:

providing an inner ring structure and an outer ring structure, each ring structure being of self-supporting shape and being substantially symmetrical about a center axis;

supporting the ring structure in coaxial relationship and with respective first end surfaces thereof substantially coplanar;

winding coils or wire having outer end turns adjacent and engaging said outer ring structure, inner end turns adjacent and engaging said inner ring structure, and end turns extending generally circumferentially of the ring structures, and side turns extending generally radially of the ring structures and lying against and spanning between said first end surfaces thereof.

Conveniently, either before or after the preform is wound, the commutator body is inserted in the bore of the inner ring structure and mounted on an armature shaft. The preform and the shaft can then be located within the cavity of a plastic molding machine, such as an injection molding machine, whereupon the inner and outer ring structures along with the coil wires therebetween are encapsulated in a matrix of resinous material. The matrix of resinous material also encapsulates the commutator tangs and the lead wire connections thereto and surrounds portions of the armature shaft and the commutator body.

An armature embodying the invention may have a well defined, thin-walled active coil section with the active coil wires extending along substantially radial paths to maximize the efficiency with which the coils are affected by the magnetic fields within which they operate. The end turns of the coils are coursed over surface portions of the inner and outer rings shaped to retain the inner and outer end turns of each coil separated from one another and from the area of the active coil sections.

According to yet another aspect there is provided by the invention a coil winding apparatus for use in manufacturing a preform for a dynamoelectric device, the preform having a frame comprising an inner ring structure and an outer ring structure, said frame structures being spaced apart and having a common axis, and a plurality of coils extending around said axis, said coils having outer end turns retained by retaining means provided on said outer ring structure and inner end turns retained by retaining means provided on said inner ring structure, the apparatus comprising:

clamp means for holding said inner and said outer ring structures in a predetermined, substantially coplanar, relative rotary, and mutually coaxial relation on a predetermined axis;

a wire guide flier rotatable about a winding axis parallel to and spaced from said predetermined axis;

means for rotating said flier about said winding axis;

wire guide shield means for guiding wire exiting from said flier, when said flier is rotating, into engagement with both said inner coil end turns retaining means and said outer coil end turns retaining means and shielding other portions of said preform frame from being engaged by said wire so that a coil of wire is wound on said preform frame having sides spanning between said ring structures; and

means for rotating said clamp means about said predetermined axis so that additional coils of wire may be wound on said preform frame at different positions thereon.

The presently preferred coil winding method and apparatus of this invention provide for both automatically winding coils or wire onto the preform frame and automatically connecting terminal ends of the coils to appropriate commutator tangs before, during, and after the winding of the coils in those cases in which the completed preform is to include a commutator. Furthemore, the coils of wire can be wound under sufficient tension and with sufficiently secure commutator connections, if the preform includes a commutator, that the completed preform has a self-supporting shape. The preform may, accordingly, readily be handled by automatic materials handling equipment, there being no loose coils or wire leads requiring attention.

A full understanding in its various aspects will be gained from the following detailed description given with reference to the accompanying drawings, in which:—

Figure 1 is a perspective view of an armature made in accordance with this invention.

Figure 2 is an axial, end view of an armature preform and an armature shaft, the preform and the shaft forming part of the armature of Figure 1.

Figure 3 is a fragmentary axial, end view of a preform frame and a commutator forming part of the preform of Figure 2, and showing a first armature coil wound on the preform frame.

Figure 4 is an axial, end view of the preform frame and a commutator showing the first three coils wound thereon in full lines and the fourth coil in phantom lines.

Figure 5 is a cross-sectional view of a portion of the armature preform taken along line 5—5 of Figure 2.

Figure 6 is a simplified, cross-sectional view of tooling of a plastic injection molding machine with the armature of Figure 1 shown formed therein.

Figure 7 is a simplified diagrammatic and schematic view of an armature winding machine in accordance with this invention used to wind coils and form commutator connections to the coils to produce the armature preform of Figure 2, and illustrating the armature preform frame at the winding station of the machine.

Figure 8 is an enlarged, fragmentary, elevational view, partly in cross-section, of a portion of the mechanism of Figure 7 with the armature preform frame and the commutator at the winding station.

Figure 9 is an enlarged, fragmentery, exploded, perspective view of a portion of the machine of Figures 7 and 8 and including the preform frame and the commutator.

Figure 10 is a fragmentary perspective view of the machine, the preform frame, and the commutator as viewed from a point of reference different from that of Figure 9, and showing the position of parts in readiness to commence the winding of coils and the formation of commutator connections.

Figure 11 is a fragmentary elevational view of parts of the machine, showing wire shielding and guiding structures by both full and phantom lines, along with a wire clamp and the preform parts, the machine elements and the preform parts being represented in the same position reached in Figure 10.

Figures 12, 14, 16, 18, 20 and 22 are each similar to Figure 10 and show, in sequence, the steps taken to loop the start wire of the first coil to be wound about a commutator tang in advance of the winding of such first coil.

Figures 13, 15, 17, 19, 21 and 23, are each similar to Figure 11 but show the position of the parts reached in Figures 12, 14, 16, 18, 20 and 22, respectively.

Figures 24 and 25 are similar to Figures 10 and 11, respectively, but show the parts in readiness to wind the first coil on the preform frame.

Figures 26 and 27 are views similar to Figures 10 and 11, respectively, but show the parts after the winding of the first coil is completed.

Detailed description

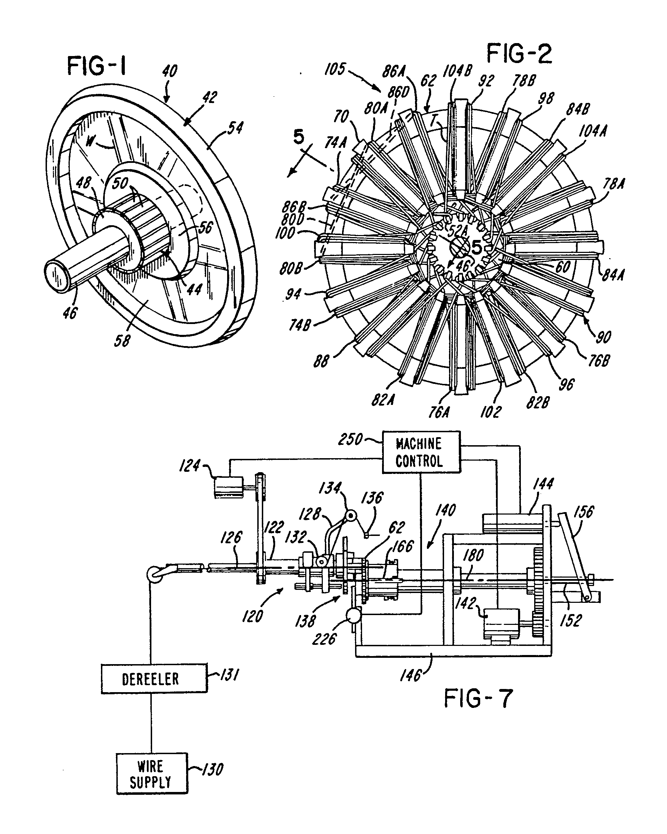

With reference to Figure 1, an armature designed for use in a flat disc motor and made in accordance with this invention is generally designated 40, and comprises a discoidal, encapsulated winding 42, a commutator 44, and an armature shaft 46. The armature shaft 46 is designed to engage bearings within the motor housing (not shown), and may be of any conventional construction. The commutator 44 comprises a plurality of circumferentially spaced conductive segments 50 on a cylindrical body of plastic press-fit on the shaft 46. The segments 50 each have means for connection to terminal portions of the several armature coils, such connection means being shown in Figures 2 through 6 and comprising commutator tangs 52, there being one tang 52 forming part of each one of the segments 50.

The winding body 42 is of a circular, disc-like configuration, having an outer ring 54, an inner ring 56, and a circular web 58. The hub 56 is formed, as will be described below, so as to be adhered both to a portion of the commutator 44 and to a portion of the armature shaft 46. The construction is such that the encapsulated winding 42 is securely affixed to the commutator 44 and the shaft 46 so that, when in use, rotation imparted to the winding body 42 by the motor field magnets (not shown) will be transmitted directly to the shaft 46.

The encapsulated winding 42 includes plural coils wound from insulated wire, preferably copper wire, which are encapsulated in a resinous material. The resinous material and the wire sections forming the web 58 have a minimal thickness and are so formed that wire strands (as indicated by W in Figure 1), may be exposed at the surfaces of the web 58. The radial dimensions of the web 58 are determined by the design parameters of the motor with which the armature 40 is to be used. More specifically, permanent magnet pole pieces in the motor housing (not shown) or the like will be located as close as possible to the web 58 and the radial dimensions of the web 58 are designed to accommodate the dimensions of the pole pieces. The pole pieces typically would be located on one side of the web 58, with steel located on the other side of the web 58, it being desirable in the construction of such motors that the spacing needed to accommodate the web 58 between the pole pieces and the steel or other motor parts be kept to a minimum.

As will be described below, the portions of the armature coils lying within the web 58 are arrayed on lines extending generally radially from the axis of the armature shaft 46, and the portions of the coils located within the outer ring 54 and the hub 56 comprise end turns which are located outside of the ambit or projection of the pole pieces, such end turns extending generally coaxially around the axis of the armature shaft 46.

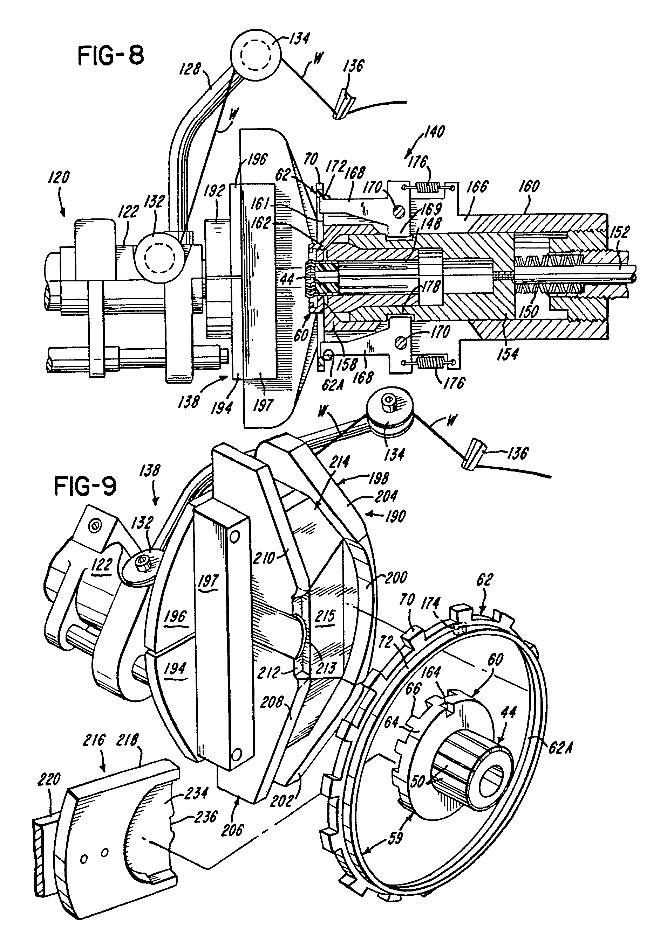

With reference to Figures 2 through 6, the manufacture of the armature 40 may be accomplished entirely automatically by a process wherein coils of wire are wound from a continuous uninterrupted length of wire onto a preform frame 59. Frame 59 comprises a pair of coaxially oriented and substantially coplanar frame members, namely an inner ring 60, which may be press-fit, hot-welded, molded or otherwise fixedly mounted on the commutator 44, and an outer ring 62 extending circularly around and spaced from the inner ring 60. The inner ring 60 comprises a disc-like, thin-walled toroidal, main body section 64, the front and rear surfaces of which may be planar and further comprises a plurality of inner coil forming protrusions or lugs 66 projecting forwardly from the main body portion 64. (For convenience, the term "forward" as used herein, refers to the end of the armature whereat the coils are connected to the commutator tangs 52). The lugs 66 are preferably in the form of L-shaped fingers or hooks and cooperate with the adjacent forward face of the inner ring 60 to form inner coil end turn-receiving channels 68. The outer ring 62 comprises a disc-like, thin-walled teroidal main body portion 69 having planar front and rear surfaces and further comprises plural, substantially radially extending outer coil forming lugs 70 protruding from the main body portion 69. In addition, the outer ring 62 comprises a rearwardly extending annular flange 72 surrounding its bore 62A. For reasons which will appear below, the bore 62A of the main body portion 69 of the outer ring 62 tapers inwardly from front to rear as may be best seen in Figures 5 and 8.

Both the inner and outer rings 60 and 62 may be made from a non-conductve material having sufficient strength, stability and rigidity to have a self-supporting shape and to withstand the loads applied during and after manufacture. A glass-filled nylon is an example of a material suitable for this purpose. Numerous other thermoset or thermoplastic materials may be used. Materials other than plastic, such as metal having an insulating coating or amorphous materials would also be suitable. For proper operation of the armature 40 it is necessary that the rings 60 and 62 be non-magnetic. A resinous material is preferred because the rings can be readily and inexpensively be manufactured in large quantities therefrom.

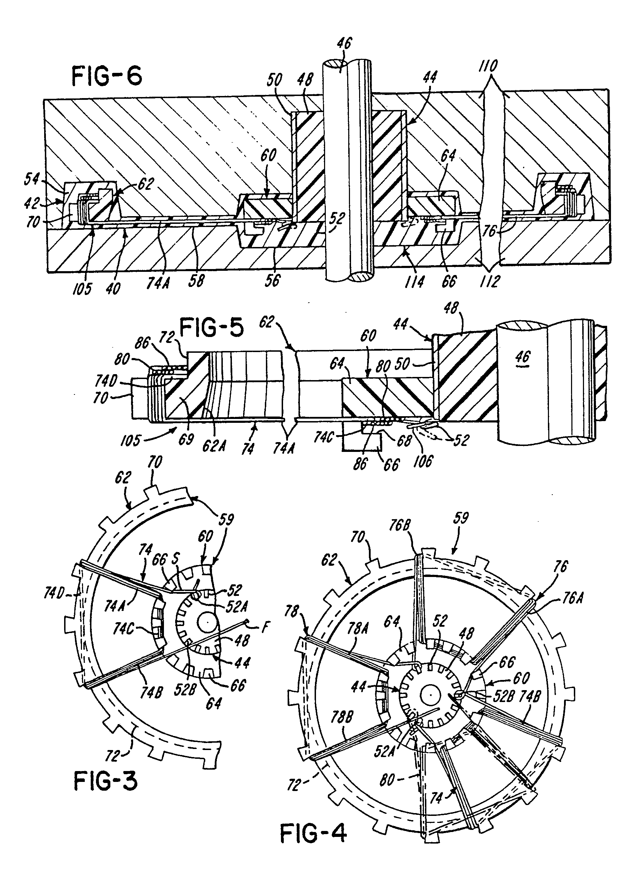

The outer end turns of each armature coil extend between a pair of circumferentially spaced outer coil forming lugs 70 and the inner end turns extend between a pair of circumferentially spaced inner coil forming lungs 66 with the coil sides which form the active coil portions spanning between the inner and the outer rings 60 and 62. The location of the armature coils on the preform 59 may be best understood with reference to Figures 3 and 4, which show a first coil 74 wound on the inner and the outer rings 60 and 62. The first coil 74 has a first active side 74A and a second active side 74B. These lie along lines extending nearly radially from the center axis of the preform frame 59. The coil 74 further includes inner end turns 74C and outer end turns 74D spanning respectively across spaced inner coil forming lugs 66 and outer coil forming lugs 70. Because the outer coil forming lugs 70 project substantially radially in the embodiment illustrated in the drawings, whereas the inner lugs 66 extend generally parallel to the center axis of the frame 59, the coil sides 74A and 74B along with the inner coil end turns 74C lie along the front of the preform frame 59. In contrast, the outer end turns 74D are formed over the outer periphery of the outer ring body 69 alongside the outer coil forming lugs 70 which they engage and then along the backside of the body of the outer ring 62. The mid-portion of the outer end turns 74D stretching along the backside of the outer ring body 69 lie against the outer periphery of the annular flange 72 and are thereby prevented from entering the area occupied by the active coil sides 74A and 74B, i.e., the area of the web 58 of the completed armature. Since the inner end turns 74C overlie inwardly directed surfaces of a pair of inner coil forming lugs 66 and the outer end turns 74D are constrained by the outer coil forming lugs 70 they engage to overlie outwardly directed surface portions of the outer ring body 69, the preform frame 59 effectively constitutes a coil form that determines the shape of the first coil 74 and all subsequent coils wound thereon.

As will be further described below, in the illustrated embodiment, when the winding of the armature 40 is commenced, the start end S of the wire W forming the first coil 74 is wrapped around one of the commutator tangs 52 (such tang being designated 52A in Figures 3 and 4) so that the start end S is extended from the selected tang 52A and coursed adjacent one of the inner coil forming lugs 66 and the wire is then wound into the first coil 74.

After the first coil 74 is wound as shown in Figure 3, the finish wire portion thereof, designated F, is advanced to the commutator tang 52B next adjacent the second active side 74B of the first coil 74, looped around the tang 52B, and the wire then coursed to wind a second coil 76 shown in Figure 4. The process is repeated then to wind the third coil 78 shown in Figure 4, and so forth. In the embodiment of the armature shown in the drawings, there are sixteen coils, all sixteen being shown in Figure 2. The first coil wound is identified in Figure 2 by its coil sides 74A and 74B, the second coil by its sides 76A and 76B, the third coil by its sides 78A and 78B, the fourth coil wound by its sides 80A and 80B and also by its outer end turns 80D, the fifth by its sides 82A and 82B, the sixth by its sides 84A and 84B, and the seventh by its sides 86A and 86B and also by its outer end turns 86D. The eighth through the fifteenth coils are designated in Figure 2 respectively by reference numbers 88, 90, 92, 94, 96, 98, 100 and 102, the lead lines to such coils extending from the reference number toward the first coil sides thereof. Finally, the sixteenth coil wound is designated in Figure 2 by its first coil side 104A and its second coil side 104B. Extending from the last side turn of coil side 104B is a terminal finish wire end T that is looped around the same commutator tang 52B about which the start wire S is looped.

It may be observed in Figures 2, 3 and 4 that there are sixteen commutator tangs 52, sixteen inner coil forming lugs 66, and sixteen outer coil forming lugs 70. However, it is to be understood that other geometries are possible involving greater or lesser numbers of tangs, lugs, and coils. Also, it will be noted in the drawinga that each coil spans across three of the inner coil forming lugs 66 and three of the outer coil forming lugs 70 and it will further by observed, as may be appreciated best from a study of Figure 4, that there is a spacing between subsequently wound pairs of coils of two of both the inner and outer coil forming lugs 66 and 70. Accordingly the coils are effectively wound in layers of three each. Thus it can be readily appreciated, with reference to Figure 4, that the fourth coil wound, which is shown by phantom lines 80, spans across the first side 74A of the first coil 74. Those familiar with armature windings will recognise the winding pattern is of a type known as retrogressive wave winding. A progressive wave winding could also be accomplished within the purview of this invention as well as both progressive and retrogressive lap windings. With the wave winding pattern illustrated, it will be observed that the second set or layer of three coils is 1/16th offset in a circumferential direction from the first layer. The same is true for subsequent layers. If there were to be 18 coils, each layer would be 1/18th offset from the adjacent layer and so forth. However, as mentioned above, many other winding patterns and geometries may be produced.

The completed assembly, shown in Figure 2, of the preform frame 59, the coils 74—104 wound on the frame 59, and the commutator 44, to which the coil terminal wires are connected is termed an "armature preform" herein and is referred to generally by reference number 105. The coils are relatively tightly wound with as many turns per coil as dictated by the performance requirements of the motor with which the armature is to used.

With reference to Figure 5, a portion of the fully wound preform 105 and the armature shaft 46 are shown in cross-section. The first wound side 74A of the first wound coil 74 is illustrated in Figure 5, such coil side being shown to be flush against the forward surfaces of both the inner and outer rings 60 und 62. Parts of the fourth wound coil 80 span over the coil side 74A as mentioned above and are therefore visible in Figure 5, these being parts that constitute, respectively, the inner and outer end turns. Inner and outer end turns of the seventh wound coil 86, appear in Figure 5, these parts being coursed around the same inner and outer coil forming lugs 66 and 70 illustrated in Figure 5 that are engaged by the first coil end turns 74C and 74D. Also shown in Figure 5, looped about the tang 52 illustrated therein, is a wire loop 106 that incorporates the second side of coil 92 with the first side of coil 94. (Coils 92 and 94 are not shown in Figure 5).

It can be appreciated by an inspection of Figures 2 through 5 that the completed preform 105 has a circular array of tightly wound coils, each of which tends to pull the inner ring 60 toward the outer ring 62. When winding devices having an even number of slots and coils, each coil is diametrically opposed to an essentially identical coil tending to pull the inner ring 60 in the opposite direction. Accordingly, the coil sides spanning between the inner and outer rings 60 and 62 are under tension and function mechanically somewhat like the spokes of a conventional bicycle wheel to hold the inner ring 60 and the outer ring 62 together and to resist relative movements of any kind therebetween. The same result will also obtain in those cases in which the device has an odd number of slots and coils or other configuration wherein each coil will be substantially, but not directly, diametrically opposed by an essentially identical coil. For this reason, the fully wound preform has a substantially self-supporting shape and can be moved about or manipulated by mechanical devices as if it were a solid, one-piece party, there being no loose or highly flexible parts requiring special or separate handling.

After the winding of the preform 105, fusing or hot-staking of each of the commutator tangs 52 is performed, as is conventionally done after the winding of other types of armatures having commutators with tangs. By such process, the free ends of the tangs 52 are bent, and thereby folded upon the wire portions looped therearound, from their positions almost parallel to the axis of the preform 105, such condition being shown by phantom lines in Figure 5, to positions wherein they are essentially perpendicular to such axis using an electrode that electrically heats the tangs and vaporizes the wire insulation, thereby insuring both secure electrical and secure mechanical connections to be made. Also, after the winding of the preform 105, the armature shaft 46 is press-fit within the bore of the commutator 44.

After processing as described above, the preform 105 and the armature shaft 46 can be placed in an appropriate plastic molding machine, such as an injection or a compression molding machine, to encapsulate the windings as well as the inner and outer rings 60 and 62 in a matrix of molded resinous material which serves also to bond the various parts of the preform and the armature shaft together. One such operation is illustrated in Figure 6 wherein the preform 105 is shown positioned in an appropriately shaped cavity formed in confronting mold members 110 and 112. Molten plastic has been injected, using techniques that may be entirely conventional, into the mold cavity to form a pressure-shaped molded resinous matrix 114 that covers, and is effectively integral with, the inner and outer rings 60 and 62 to form therewith, and with the coil portions supported thereby, the rear portion of the armature hub portion 56 and the entire outer margin 54 of the completed armature 40. The web 58 is similarly formed by an encapsulation of the coil side turns in the molded matrix 114. The forward part of the hub portion 56 is formed by the molten resin, which serves to encapsulate the inner coil forming lugs 66, the wire portions extending therearound, and also the tangs 52 and the wire parts that loop therearound. The resinous material used to form the molded matrix 114 may comprise any one of numerous available thermoset or thermoplastic materials. Polyethylene terephthalate (PET) is an example of a suitable material.

The molding operation may occur using various different processes with the advantage that the parts of the preform 105, because they are self-supporting and of a substantially rigid configuration, can simply be placed into the mold cavity either by hand or by automatically operating machinery. As a preliminary to the molding operation, one may optionally flatten the coil sides because of the desirability of having the web 58 of absolute minimum thickness.

Apparatus for winding the coils and forming the commutator connections is illustrated in Figures 7 through 27. Figure 7 is a simplified, somewhat diagrammatic and schematic view of the machine which is generally designated 120.

The winding machine 120 has a flier spindle 122 driven by a motor 124 for rotation about a flier axis 126. A flier 128 is mounted on the spindle 122 for rotation therewith. Wire from a suitable source of wire 130 placed under tension by dereeler 131, which may be entirely conventional, is coursed through the spindle 122 and outwardly therefrom around a wire exit pulley 132 adjacent to the flier 128 and a flier pulley 134 at the free end of the flier 128. The wire W may be held by a clamp 136 which may be associated with a cutter mechanism (not shown) for severing the wire portions between the winding of subsequently wound armatures. Those familiar with flier type armature winding machines will recognize that the structure as thus far described in Figure 7 may be entirely conventional, various types of flier-type winding machines being well known. For this reacon the flier drive is not described in further detail herein.

The machine 120 illustrated in Figure 7 further includes a winding form assembly 138, that will be further described below, and a preform clamp and rotator assembly, generally designated 140. The preform clamp and rotator assembly 140 holds the inner and outer rings 60 and 62 in relatively fixed coaxial, substantially coplanar, and rotational positions, only the outer ring 62 being visible in Figure 7.

The clamp and rotator assembly 140 includes a drive motor 142 and a clamp release cylinder 144 which, together with the remainder of the assembly 140, are mounted on a frame 146 which can be affixed to the bed of the machine (not shown).

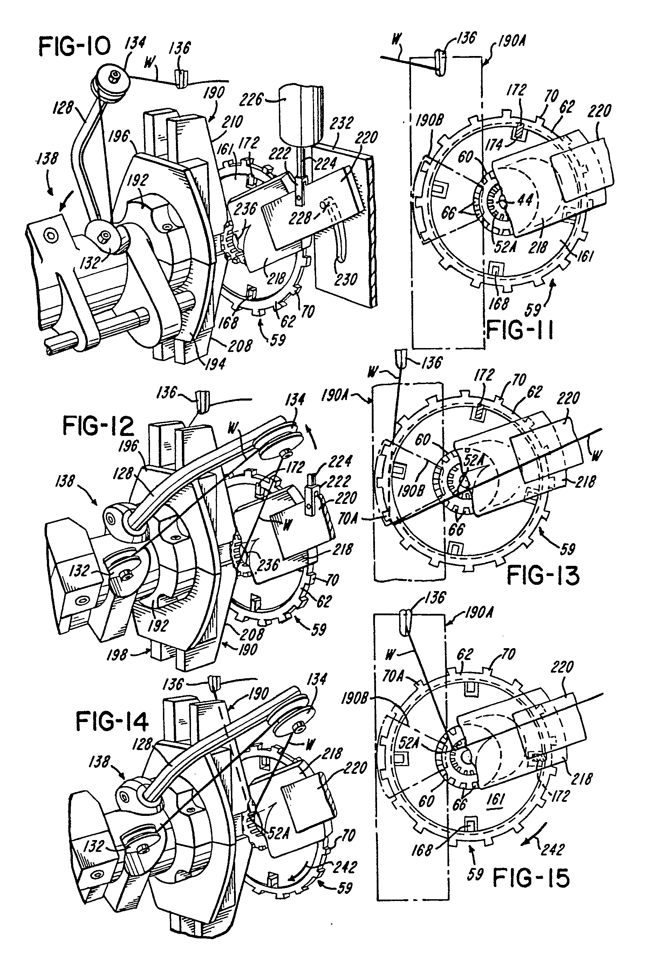

With continued reference to Figure 7, and also with reference to Figures 8 and 9, the commutator 44 is shown clamped by a split collet 148 which is held in clamping relation thereto by a spring washer assembly 150 surrounding a collet operating shaft 152 and biasing a collet operating ram 154 affixed to the end of the collet operating shaft 152 to the left as shown in Figure 8 so that the split collet 148 grippingly engages the commutator 44. It will be noted in Figures 7 and 8 that a collet operating lever 156 may be driven by the clamp release cylinder 144 so as to overcome the bias of the spring washer assembly 150 and thereby cause the collet operating ram 154 to be moved to the right as shown in Figure 8, whereupon the gripping pressure exerted by the collet 148 upon the commutator 44 will be reduced so as to permit insertion or removal of the commutator.

The collet operating ram 154 cooperates, as is obvious, with a collet cam 158 to cause the collet 148 to grip the commutator. The collet cam 158 forms part of a collet housing 160 which has on its forward face 161, i.e. the face confronting the winding form assembly 138, a forwardly extending projection or key 162 adapted to fit within a notch 164 in the rear face of the inner ring 60 (see Figure 9) for purposes of holding the inner ring 60 in a predetermied rotary relationship relative to the outer ring 62 as will be made more apparent below.

The housing 160 is generally tubular and has four slots 166 spaced equally therearound within which are located clamp levers 168 mounted for pivotal movement on the housing 160 by pivot pins 170 and which are formed at their outer ends to innerfit within the bore of the outer ring 62. Three of the levers 168 are formed so as to snugly mate with and clamp against the tapered inner bore surface 62A of the outer ring 62. The fourth arm 168 is formed with a projection or key 172 for engaging a cooperating notch 174 (see Figure 9) in the bore 62A of the outer ring 62 so that the outer ring 62 is held in a predetermined rotary position relative to the four clamp levers 168. The levers 168 are each biased by springs 176 connected thereto and to the housing 160 so that the free ends of the levers 168, i.e., those ends designed to engage the bore 62A, are biased outwardly to securely hold the outer ring 62. At such time as the collet release cylinder 144 is energized to release the grip on the commutator 44, the outer ring clamp levers 168 are caused to be pivoted inwardly of the bore 62A and become disengaged from the outer ring 62 by virtue of engagement of the margins of a groove 178 encircling the collet ram 154 with pawl-like, radially inwardly projecting lugs 169 forming parts of the levers 168.

The collet mechanism described above, including the collet 148, the collet ram 154, the housing 160, and the levers 168 are all rotatable about a collet axis 180 (see Figure 7) coincident with the axis of the commutator 44 and the preform frame 59. In Figure 7, the collet axis 180 is shown parallel to and offset from the flier axis 126 (as it would appear in a plan view), a condition necessary to enable the coils to be successively wound about the axes which are offset from the axis of the preform frame 59. As will be described below, the collet parts are caused to rotate by the clamp and rotator assembly drive motor 142 through a repeating series of steps to effect connection of the wire W to the commutator tangs and to wind the coils.

Referring to Figures 8 and 9, the winding form assembly 138 includes a winding form 190 which, as conventional, is mounted by a bearing located within a housing 192 on the end of the flier spindle 122 and includes a pair of winding form support plates 194 and 196 on which is supported a form mounting block 197 on which wire guide plates 198, 206 and 214, to be described below, are mounted. The winding form 190 includes an outer wire guide plate 198 which has a concavely curved surface 200 adapted to shield a portion of the outer ring 62 to prevent the wire sliding along the plate 198 from engaging the outer ring 62. Adjacent curved surface 200, the outer guide plate 198 has sloping lower and upper wire guide edge surfaces 202 and 204, respectively, for guiding the wire around the outer coil forming lugs 70 across which extend the outer end turns of the coil to be wound.

The winding form 190 further includes an inner wire guide plate 206 having sloping lower and upper wire guide edge surfaces 208 and 210, respectively, for guiding the wire around the inner coil forming lugs 66 across which the inner end turns of the coil extend. The center portion of the face of the inner guide plate 206 has a recess 212 designed to provide a pocket for the inner coil forming lugs 66 across which the inner end turns of the coil extend and is provided with an arcuate wire guide lip 213 designed to be located between the pocketed lugs 66 and the adjacent commutator tangs 52. As the flier 128 rotates during the winding of a coil to draw wire across the inner guide plate 206, the wire slides along the surface 208 and, as it enters the recess 212, engages along one side of one of the inner coil forming lugs 66 and is then forced by the arcuate wire guide lip 213 into the inner end turn receiving channels 68 shown in Figure 5. As the flier 128 continues to rotate, the wire is guided by the upper edge guide surface 210 to the other one of the inner coil forming lugs 66 which it engages. The outer wire guide plate 198 is spaced from the inner wire guide plate 206 by an intermediate guide plate 214 having a polished, planar guide surface 215 provided to closely confine the coil side turns adjacent the front surface of the rings 60 and 62 as the winding progresses.

Referring to Figures 7, 9, and 10, an inner pin and commutator shield assembly 216 is provided to prevent the wire from engaging the commutator tangs or the wrong inner coil forming lugs 66. The assembly 216 includes an inner pin and commutator shield plate 218 to which is rigidly attached a positioning arm 220 that is pivotally supported by a clevis 222 at the end of a driver rod 224 of an inner pin and commutator shield positioning air actuator 226. The end of the positioning arm 220 remote from the shield plate 218 has a guide pin 228 that rides in an arcuate guide slot 230 in a guide plate 232.

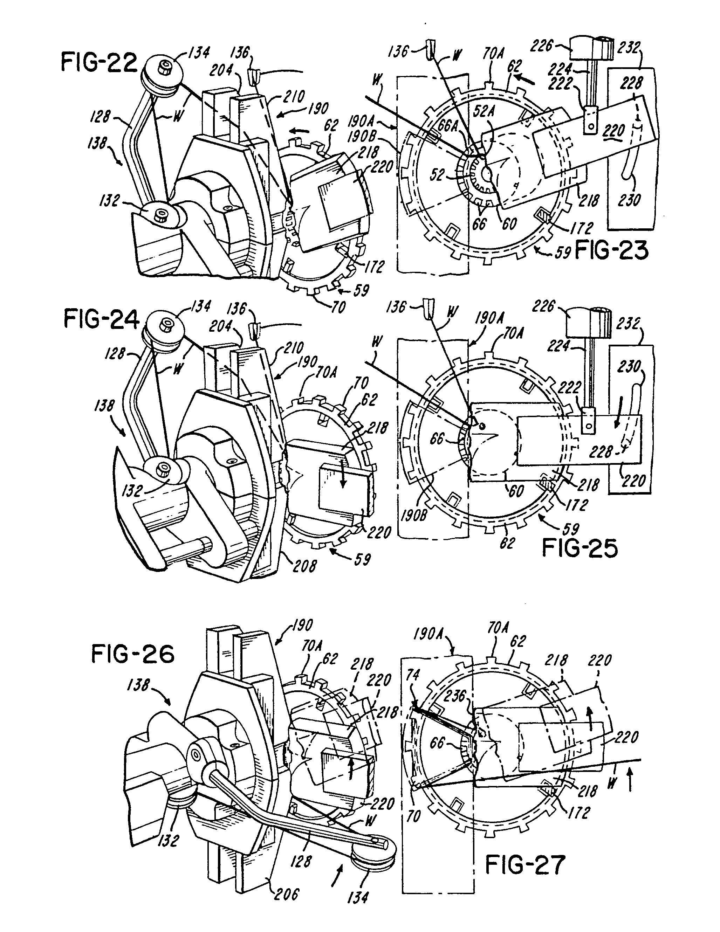

The inner pin and commutator shield plate 218 has a recess 234 shown in Figure 9 for receiving selected ones of the inner coils forming lugs 66 and the commutator tangs, the recess being located in the face of the shield confronting the preform frame 59. The shield 218 is selectively located in either one of two positions, namely an extended position and a retracted position. Figure 27 shows in full lines the extended position which the shield plate 218 occupies during the time a coil is being wound. There it will be noted that the shield plate 218 overlies a sufficiently large portion of the front face of the inner ring 60 that only three of the inner coil forming lugs 66 are fully exposed, these being the same three pins pocketed by the central recess 212 of the inner guide plate 206. The shield plate 218, accordingly, shields all of the other inner coil forming lugs 66 as well as all of the commutator tangs 52 during the winding of a coil and thereby prevents the wire from hooking any portion of the inner ring 60 but for the lugs 66 about which the inner coil end turns are being formed. The face of the shield plate 218 opposite the face confronting the inner ring 60 is concavely contoured as needed to permit the wire to enter the center recess 212 of the inner guide plate 206 as the flier 128 rotates to wind a coil. The free end edge, designated 236, of the shield plate 218 is also contoured to assist in guiding the wire into the channel 68. In Figure 26 it can be seen that, in the extended position of the shield plate 218, its free end edge 236 is located closely adjacent to the inner wire guide plate 206. In the retracted position of the shielded plate 218, shown in Figures 10 through 25 and in phantom lined in Figures 26 and 27, it is moved horizontally away from the inner guide plate 206 and is also pivoted in a counterclockwise direction, as viewed therein, for reasons which will become apparent.

Figures 10 through 27 show in sequence the manner in which the apparatus of this invention operates to wind the preform shown in Figure 2. First, it may be noted that Figure 11 shows the same position of the parts that are illustrated in Figure 10. The same scheme is followed throughout the remaining Figures 12 through 27, with the odd numbered figures illustrating the parts in the same position as the immediately preceding figures. Also, the odd numbered figures beginning with Figure 1 illustrate the winding form assembly 190 by phantom lines 190A. The margins of the winding form guide surfaces that cooperate with the inner ring 60 and the outer ring 62 to determine the shape of the coils are indicated by phantom lines 190B.

In general, Figures 10 through 23 illustrate a sequence of steps that may be taken to loop the start wire end S around its associated tang 52A in preparation for the winding of the first coil 74. Figures 24 and 25 illustrate the position of parts at the commencement of the winding of the first coil 74 and Figures 26 and 27 show the position of the parts at the end of the winding of the first coil 74. After the parts have reached the position shown in Figure 27, the sequence of steps shown in Figures 14 through 27 are repeated for each coil to be wound. The looping of the wire position about the tangs 52 is accomplished by a series of rotary movements of both the flier 128 and the preform assembly of the rings 60 and 62 and the commutator 44. During the looping operation, the shield plate 218 is located in its retracted position to enable the wire to be guided by the inner guide plate 206 along the side of the tang 52A around which it is to be looped, as is illustrated in Figures 12 and 13. To enable the rotary positions of the preform assembly to be quickly grasped, the key 172 engaging in the outer ring notch 174 is marked with hatch lines in the odd numbered figures beginning with Figure 11, and it should be recognized that the hatch lines do not in this case represent that the part is shown in cross-section.

Those familiar with flier-type armature winding machines will appreciate that the process for winding the armature preform and making the appropriate connections to the commutator tangs is related to procedures disclosed in United States Patent Nos. Re. 27,893 and 3,705,459, and will be able to comprehend the winding and tang looping procedures by studying Figures 3, 4, and 10 through 27 herein. At the commencement of the tang looping and coil winding process, the inner and outer rings 60 and 62 along with the commutator 44 are clamped in the position shown in Figures 10 and 11 and the free end of the wire W is held by the wire clamp 136. The looping of the start wire S around a tang 52 is begun by rotation of the flier in a "forward" direction, which is the same direction in which the flier is rotated to wind the coils. This is counterclockwise or "top-going" as viewed in Figures 10 and 12. The wire W is thereby extended alongside the outer coil forming pin designated 70A in Figure 13 and also alongside the commutator tang 52A around which the start wire portion S is to be looped. The preform 105 is then rotated in a clockwise direction, as indicated by the arrow 242 in Figures 14 and 15, through an angle of slightly less than 90 degrees. During this rotary movement of the preform 105, the section of wire extending from the tang 52A to the flier pulley 134 is prevented by the shield plate 218 from hooking any of the tangs other than tang 52A. At the same time, the outer coil forming lug 70A moves out of engagement with the wire W, so that the length of the section of the wire W between the clamp 135 and the flier pulley 134 is shortened. Those familiar with armature winding machines will recongize that the dereeler 131 may be used to substantially remove the slack wire condition that would result from the shortening of such wire section.

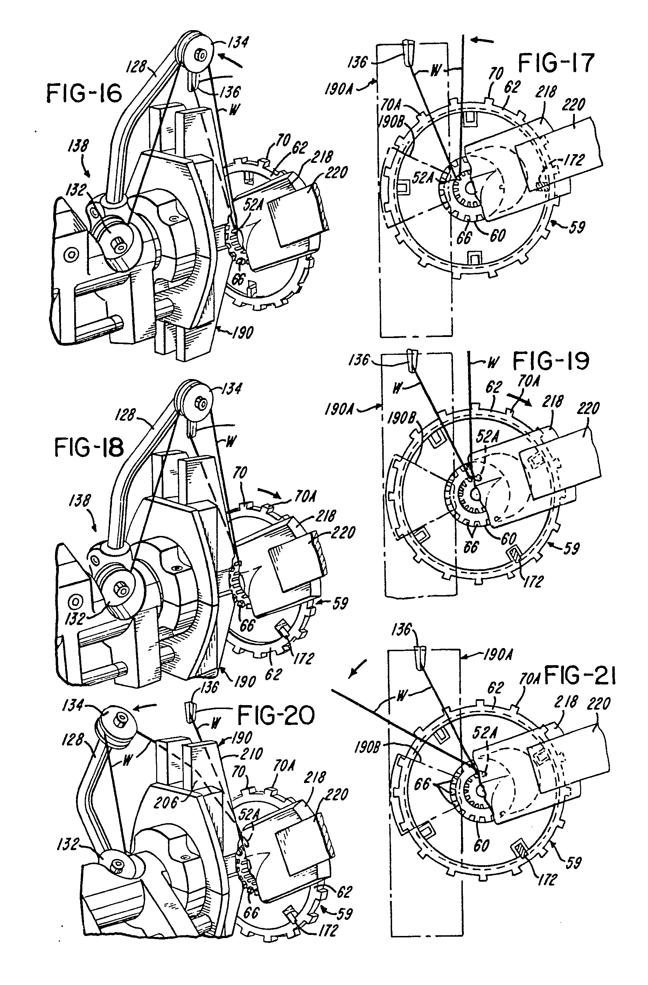

After the clockwise rotation of the preform frame 59 shown in Figures 14 and 15, the flier is rotated further in the forward direction as indicated by the arrows in Figures 16 and 17 through an angle of approximately 60 degrees in order to more securely lock the wire on the tang 52A. The wire it then looped around the tang 52A by rotating the preform frame 59 in a clockwise direction, as indicated by the arrows in Figures 18 and 19, through an additional angle on the order of 50 to 60 degrees which causes the tang 52A to move under the shield plate 218. The section of the wire W between the tang 52A and the flier pulley and also the section of wire between the flier pulley 134 and the tang 52A extend over the end edge of the tang shield plate 218 and the wire is almost completely looped around the tang 52A.

After the parts have reached their positions shown in Figures 18 and 19, the flier is again rotated in its forward direction through approximately 60 degrees to complete the looping of the wire about the tang 52A as shown in Figures 20 and 21. During the increment of flier rotation between the positions of parts illustrated in Figures 18 and 19 and the positions illustrated in Figures 20 and 21, the stretch of wire between the tang 52A and the flier pulley 134 begig sliding along the upper wire guide surface 210 of the inner guide plate 206 so that the wire is guided to a position wherein it partly lies between the inner ring lug 66 next adjacent the tang 52A and the next adjacent counterclockwise inner ring lug 66. Accordingly, the preform 105 may then be further rotated to the position shown in Figures 22 and 23 to bring the lug 66A into engagement with such stretch of wire whereupon the preform parts and the flier are positioned to initiate the winding of the first coil 74. At or before the commencement of the winding of the first coil, the shield actuator 226 is energized to move the tang shield plate 218 into its maximum shielding or extended position shown in Figures 24 and 25. Thus, the shield plate 218 is pivoted in the clockwise direction and translated horizontally toward the winding form assembly 190. The flier may then be rotated in its forward direction to wind the first coil 74. During the winding operation, the wire is prevented from engaging the commutator tangs and all but the intended inner ring lugs 66 by the shield plate 218.

During the winding of the first coil 74, the section of wire between the commutator tang 52A and the clamp 136 is severed. This is preferably done immediately adjacent the tang 52A and may be accomplished in various ways. The presently preferred method would be to cause the wire to be severed against the edge of the tang by abruptly moving the clamp 136 away from the commutator 44 clamped in the winding station by the clamp and rotator assembly 140. This method is described in U.S. Patent No. 3,812,577, and a further discussion of the method or of apparatus for accomplishing the same is deemed unnecessary.

A comparison of Figure 27, showing the first coil 74 fully wound, and Figure 13, reveals that the stretch of wire leading to the flier is in approximately the same orientation and that it leads to the flier from an outer coil forming pin 70 shown in Figure 27 that is in the same position as the outer coil forming lug 70A about which the lead wire was hooked in the position shown in Figure 12. Accordingly, the parts are in position when the winding of the first coil is completed to initiate the looping of the terminal end of the first coil 74 about the next adjacent tang 52B. The first step is to return the tang shield plate to its upper and outer or retracted position, as is indicated by phantom lines in Figures 26 and 27, to expose the tang 52B for engagement by the wire. The sequence of steps illustrated and described in connection with Figures 14 through 27 are then repeated to accomplish the complete looping of the wire around the tang 52B and the winding of the second coil 76. These same steps are then repeated throughout the winding of the armature until all sixteen coils are wound.

At the end of the winding operation, the finish wire T of the last wound coil 104 is looped around the same tang 52A about which the start wire S was looped by a repetition of the steps illustrated and described in connection with Figures 14 through 23. The next step is to sever the wire between the flier pulley and the wound armature. Again, this may be accomplished in konwn ways, the method described in Patent No. 3,812,577 being preferred for this purpose.

Those familiar with the art of armature winding will recognize that the aforedescribed steps for winding the armature may be varied for different armature configurations. Some of the steps may not be needed for certain armature configurations, while others may require additional steps.

The operation of the machine 120 is controlled by machine control circuitry, schematically illustrated at 250 in Figure 7, by which the motors 124 and 142 and the actuators 142 and 226 are selectively energized to perform their function in proper sequence. Those familiar with filter-type armature winding machines will recognize that control circuitry used for armature rotators, such as that shown in United States Patent No. 3,673,878, may be used for controlling the clamp and rotator assembly drive motor 142. More recently developed electronic controlled rotators, which are well known and widely used in the art, could also be used. Electronic controls for operating fliers are also well known in the industry. United States Patent No. 4,163,931, discloses one form of circuitry for this purpose. Because the machine control 250 could take various forms and may be old and well known, it is not further illustrated or described herein.

The preform 105 described above includes the commutator 44. Such is preferred in the case of armature winding because all of the commutator connection steps are performed entirely automatically as the winding progresses. The preform 105 does not include the armature shaft 46 although it could optionally be mounted in place before the armature is wound. It clearly is an advantage to have the armature shaft 46 in place when the resinous material is molded so such material will be engaged with the shaft 46 as shown in Figures 1 and 6.

### Claims

1. A preform for a flat coil dynamoelectric device, comprising an outer ring structure (62) having a self-supporting shape and being substantially symmetrical about a center axis, an inner ring structure (60) substantially symmetrical about said center axis located coaxially within said outer ring structure and having a self-supporting shape, the inner and outer ring structures having substantially coplanar first end surfaces, and plural coils of wire (74—104) wound on said ring structures, said coils having sides extending generally radially of the ring structures and lying against and spanning between said first end surfaces thereof, and end turns (74C, 74D—104C, 104D) extending generally circumferentially of said ring structures.

2. A preform as defined in claim 1, wherein said inner and outer ring structures each have lugs (70) around which said coils are wound.

3. A flat coil dynamoelectric device comprising a preform as defined in claim 1 and having the ring structures and coils thereof encapsulated in a matrix of resinous material (114).

4. An armature comprising a device according to claim 3, and a commutator (44) located in the bore of said inner ring structure.

5. An armature as claimed in claim 4, wherein said inner and outer ring structures each have lugs (66, 70) around which said coils are wound.

6. An armature as claimed in claim 5, wherein said lugs (70) on said outer ring structure project outwardly from said outer ring structure with respect to the axis of said ring structures.

7. An armature as claimed in claim 6, wherein said outer end turns (74D—104D) are formed around the outer margin of said outer ring structure and hook over spaced pairs of said lugs projecting therefrom.

8. An armature as claimed in claim 5, 6 or 7, wherein said lugs (66) on said inner ring structure include surface portions facing generally toward said axis, said coils being wound from turns of wire coursed around a pair of said lugs on said outer ring structure and said surface portions of a pair of said lugs on said inner ring structure.

9. An armature as claimed in claim 8 wherein said lugs (66) on said inner ring structure are hook-shaped and form with the adjacent face of said inner ring structure wire-receiving grooves (68), and wherein said inner end turns (74C—104C) are located substantially within said grooves.

10. An armature as claimed in any one of claims 4 to 9, wherein said outer ring structure has a circular flange (72) engaged by the outer end turns of said coils and preventing said outer end turns from entering the area between said ring structures.

11. An armature as claimed in any one of claims 4 to 10, wherein said ring structures each comprise generally circular, thin-walled body members.

12. An armature as claimed in any one of claims 4 to 11, wherein said inner end turns extend along said first end surface of said inner ring structure.

13. An armature as claimed in claim 12, wherein said outer end turns extends over the outer periphery and along the backside of said outer ring structure.

14. An armature as claimed in any one of claims 4 to 13, wherein said coils are wound under tension so that each coil exerts a force tending to pull said ring structures towards one another.

15. An armature as claimed in claim 14, wherein for each of said coils there is a substantially diametrically opposed one of said coils tending to pull said ring structures together in the opposite direction.

16. A method of constructing a preform for a flat disc armature according to claim 1, comprising the steps of:—
providing an inner ring structure and an outer ring structure, each ring structure being of self-supporting shape and being substantially symmetrical about a center axis;
supporting the ring structures in coaxial relationship and with respective first end surfaces thereof substantially coplanar;
winding coils of wire having outer end turns adjacent and engaging said outer ring structure, inner end turns adjacent and engaging said inner ring structures, the end turns extending generally circumferentially of the ring structures, and side turns extending generally radially of the ring structures and lying against and spanning between said first end surfaces thereof.

17. A method according to claim 16, wherein after the winding of all coils has been completed, said inner and outer ring structures and said coils are encapsulated in a matrix of resinous material.

18. A method as defined in claim 16 or 17, further comprising the steps of:
positioning a commutator in the bore of said inner ring structure; and
connecting the terminal portions of said coils to said commutator segments.

19. A method according to claim 16, 17 or 18, wherein the inner ring structure has inner coil end turns retaining means (66) and the outer ring structure has outer coil end turns retaining means (70), and the winding of the coils comprises the steps of:
rotating a wire guide flier (128) about a predetermined axis parallel to and spaced from the axis of the ring structures, and while said flier is rotating, guiding wire exiting from said flier into engagement with both said inner coil end turns retaining means and said outer coil end turns retaining means while shielding other portions of said preform frame from being engaged by said wire so that a coil of wire is wound having side spanning between said inner and outer ring structures; and
rotating the clamp means (140) and ring structures (62, 60) so that additional coils of wire may be wound at different locations thereon.

20. A method according to claim 19, wherein shield means (218) shield said other portions of said preform frame during winding a coil, at least part of said shield means is moved after the winding of each coil to expose at least one tang (52) provided on the commutator so that wire exiting from said flier may be connected to one of said tangs, and said wire is connected to said tang by a series of rotational movements of said flier (128) and said clamp means (140).

21. A method according to claim 20, wherein said wire is connected to each of said tangs (52) by being looped therearound.

22. A coil winding apparatus for use in constructing a preform for a dynamoelectric device according to claim 1, the preform having a frame comprising an inner ring structure (60) and an outer ring structure (62), said frame structures being spaced apart and having a common axis, and a plurality of coils (74—104) extending around said axis, said coils having outer end turns (74D) retained by retaining means (70) provided on said outer ring structure (62) and inner end turns (74C) retained by retaining means (66) provided on said inner ring structure, the apparatus comprising:

clamp means (140) for holding said inner and said outer ring structures in a predetermined, substantially coplanar, relative rotary, and mutually coaxial relation on a predetermined axis;

a wire guide flier (128) rotatable about a winding axis parallel to and spaced from said predetermined axis;

means (124) for rotating said flier about said winding axis;

wire guide shield means (190, 218) for guiding wire exiting from said flier, when said flier is rotating, into engagement with both said inner coil end turns retaining means and said outer coil end turns retaining means and shielding other portions of said preform frame from being engaged by said wire so that a coil of wire is wound on said preform frame having sides spanning between said ring structures; and

means (142) for rotating said clamp means about said predetermined axis so that additional coils or wire may be wound on said preform frame at different positions thereon.

23. An apparatus as defined in claim 22, wherein said clamp means and said ring structures are provided with interfitting surfaces (162, 172, 164, 174) for maintaining said predetermined relative rotary positions between said ring structures.

24. An apparatus as defined in claim 22 or 23, wherein said clamp means includes a collet (148) operating shaft (152) and said means for rotating said clamp means comprises means for rotating said collet operating shaft.

25. An apparatus as defined in claim 24, wherein said collet is engageably fixed in relation to said inner ring structure, said collet (148) being located in a collet housing (160) and said clamp means further comprises plural clamp members (168) pivotally mounted on said housing and adapted to clampingly engage inside said outer ring structure.

26. An apparatus as defined in claim 25, wherein said clamp members are spring biased into clamping relation to said outer ring structure and pivoted out of clamping relation to said outer ring structure in repsonse to movements of said collet operating shaft.

27. An apparatus as defined in any one of claims 22 to 26, for manufacturing an armature preform having a commutator (44) with a plurality of tangs (52) located within the bore of said inner ring structure and coaxial therweith, and said coils having terminal portions connected to said commutator tangs, wherein the wire guide shield means (190, 218) is arranged to guide the wire so that the coil of wire is wound on said preform frame with the end turns extending along said inner and said outer ring structures, and the wire guide and shield means includes a movable commutator shield means (216) and means (226) operable to move said movable commutator shield means between the winding coils so that terminal portions of said coils may be connected to said tangs by a succession of rotary movements of said flier (128) and said clamp means (140).

**Patentansprüche**

1. Eine Vorform für eine dynamoelektrische Vorrichtung mit einer flachen Spule, wobei die Vorform eine äußere Ringstruktur (62), die eine selbsttragende Form aufweist und im wesentlichen symmetrisch un eine Zentralachse angeordnet ist, eine innere Ringstruktur (60), die im wesentlichen symmetrisch um die Zentralachse koaxial innerhalb der äußeren Ringstruktur angeordnet ist und eine selbsttragende Form aufweist, wobei die innere und äußere Ringstruktur im wesentlichen koplanare erste Endoberflächen aufweisen, und mehrere Drahtspulen (74 bis 104) umfaßt, die auf die Ringstrukturen aufgewunden sind, wobei die Spulen Seiten, die sich im wesentlichen radial zu den Ringstrukturen ausdehnen und sich zwischen ihren ersten Endoberflächen erstrecken und dagegen anliegen und Endwindungen (74C, 74D—104C, 104D) aufweisen, welche sich im wesentlichen um Umfangsrichtung der Ringstrukturen erstrecken.

2. Eine Vorform nach Anspruch 1, wobei die innere und die äußere Ringstruktur jeweils Nasen (70), um welche die Spulen gewunden sind aufweist.

3. Eine eine flache Spule aufweisende dynamoelektrische Vorrichtung, welche eine Vorform nach Anspruch 1 umfaßt, wobei ihre Ringstrukturen und Spulen in eine Matrix aus Harzmaterial (114) eingebettet sind.

4. Ein Anker, welcher eine Vorrichtung nach Anspruch 3 und einen Kommutator (44), der in der Bohrüng der inneren Ringstruktur angeordnet ist, umfaßt.

5. Ein Anker nach Anspruch 4, wobei die innere und äußere Ringstruktur jeweils Nasen (66, 70) aufweist, um welche die Spulen gewunden sind.

6. Ein Anker nach Anspruch 5, wobei die Nasen (70) auf der äußeren Ringstruktur von der äußeren Ringstruktur in bezug auf die Achse der Ringstrukturen nach außen vorstehen.

7. Ein Anker nach Anspruch 6, wobei die äußeren Endwindungen (74D bis 104D) um den äußeren Rand der äußeren Ringstruktur gebildet sind und sich um beabstandete Paare der davon vorstehenden Nasen schlingen.

8. Ein Anker nach Anspruch 5, 6 oder 7, wobei die Nasen (66) auf der inneren Ringstruktur Oberflächenbereiche enthalten, die im wesentlichen der Achse zugewandt sind, wobei die Spulen aus Drahtwindungen gewunden sind, die um ein Paar der Nasen auf der äußeren Ringstruktur und die Oberflächenbereiche von einem Paar der Nasen auf der inneren Ringstruktur gelegt sind.

9. Ein Anker nach Anspruch 8, wobei die Nasen (66) auf der inneren Ringstruktur hakenförmig sind und mit der angrenzenden Strinfläche der inneren Ringstruktur Drahtaufnahmerillen (68) bilden, und wobei die inneren Endwindungen (74C bis 104C) im wesentlichen innerhalb der Rillen angeordnet sind.

10. Ein Anker nach wenigstens einem der Ansprüche 4 bis 9, wobei die äußere Ringstruktur einen kreisförmigen Flansch (72) aufweist, welcher mit den äußeren Endwindungen der Spulen in Berührung steht und die äußeren Endwindungen davor schützt, in den Bereich zwischen den Ringstrukturen einzutreten.

11. Ein Anker nach wenigstens einem der Ansprüche 4 bis 10, wobei die Ringstrukturen jeweils im wesentlichen kreisförmige, dünnwandige Körperteile umfassen.

12. Ein Anker nach wenigstens einem der Ansprüche 4 bis 11, wobei sich die inneren Endwindungen Längs der ersten Endoberfläche der inneren Ringstruktur erstrecken.

13. Ein Anker nach Anspruch 12, wobei die äußeren Endwindungen sich über die äußere Peripherie und Längs der Rückseite der äußeren Ringstruktur erstrecken.

14. Ein Anker nach wenigstens einem der Ansprüche 4 bis 13, wobei die Spulen unter Zugspannung gewunden sind, so daß jede Spule eine Kraft ausübt, die dazu tendiert, die Ringstrukturen aufeinander zuzuziehen.

15. Ein Anker nach Anspruch 1, wobei für jede der Spulen eine im wesentlichen diametral gegenüberliegende Spule vorhanden ist, die dazu tendiert, die Ringstrukturen zusammen in der entgegengesetzten Richtung zu ziehen.

16. Ein Verfahren zum Aufbauen einer Vorform für einen flachen Scheibenanker nach Anspruch 1, mit den Verfahrensschritten:

Vorsehen einer inneren Ringstruktur und einer äußeren Ringstruktur, wobei jede Ringstruktur eine selbsttragende Form aufweist und im wesentlichen symmetrisch zu einer Zentralachse ist;

Haltern der Ringstrukturen in koaxialer Zuordnung und in bezug auf ihre erste un zweite Oberfläche im wesentlichen koplanar;

Winden von Drahtspulen, die äußeren Endwindungen, die an die äußere Ringstruktur angrenzen und damit im Eingriff stehen, und innere Endwindungen aufweisen, die an die innere Ringstruktur angrenzen und damit im Eingriff stehen, wobei die Endwindungen sich im wesentlichen in Umfangsrichtung der Ringstruktur erstrecken, und die Seitenwindungen aufweisen, die sich im wesentlichen radial zu den Ringstrukturen ausdehnen und dagegen anliegen und sich zwischen ihren ersten Endoberflächen erstrecken.

17. Ein Verfahren nach Anspruch 16, wobei, nachdem das Winden von allen Spulen angeschlossen worden ist, die innere und äußere Ringstruktur und die Spulen in eine Matrix aus Harzmaterial eingekapselt werden.

18. Ein Verfahren nach Anspruch 16 oder 17, mit den Verfahrensschritten:

Anordnen eines Kommutators in der Bohrung der inneren Ringstruktur; und Verbinden der Endteile der Spulen mit den Kommutatorsegmenten.

19. Verfahren nach Anspruch 16, 17 oder 18, wobei die innere Ringstruktur halteeinrichtungen (66) für die inneren Spulenendwindungen und die äußere Ringstruktur Halteeinrichtungen (70) für die äußeren Spulenendwindungen aufweist und das Winden der Spulen die verfahrensschritte umfaßt:

Drehen eines Drahtführungsfliegers (128) um eine vorbestimmte Achse parallel zu und beabstandet von der Achse der Ringstrukturen, und während sich der Flieger dreht, Führen des aus dem Flieger austretenden Drahtes in Eingriff sowohl mitt den Halteeinrichtungen für die inneren Spulenendwindungen als auch mit den Halteeinrichtungen für die äußeren Spulenendwindungen während andere Teile des Vorformrahmens gagen den Eingriff durch den Draht abgeschirmt werden, so daß eine Drahtspule gewunden wird, welche sich zwischen der inneren und äußeren Ringstruktur erstreckende Seiten aufweist; und

Drehen der Klemmeinrichtung (140) und Ringstrukturen (62, 60), so daß zusätzliche Drahtspulen an unterschiedlichen Stellen darauf gewunden werden können.

20. Ein Verfahren nach Anspruch 19, wobei die Abschirmeinruchtung (218) den äußeren Teil des Vorformrahmens während des Windens einer Spule abschirmt, wobei wenigstens ein Teil der Abschirmeinrichtung nach dem Winden von jeder Spule bewegt wird, um wenigstens eine Zunge (52) freizulegen, die auf dem Kommutator vorgesehen ist, so daß aus dem Flieger austretender Draht mit einer der Zungen verbunden werden kann, und wobei der Draht mit der Zunge durch eine Folge von Rotationsbewegunen des Fliegers (128) und der Klemmeinrichtung (140) verbunden wird.

21. Verfahren nach Anspruch 20, wobei der Draht mit jeder Zunge (52) verbunden wird, indem er darum gaschlungen wird.

22. Eine Spulenwindungsvorrichtung zur Verwendung bei der Herstellung einer Vorform für eine dynmoelektrische Vorrichtung (3), wobei die Vorform einen Rahmen aufweist, welcher eine innere Ringstruktur (60) und eine äußere Ringstruktur (62), wobei die Rahmenstrukturen zueinander beabstandet sind und eine gemeinsame Achse aufweisen, und eine Vielzahl von Spulen (74 bis 104) umfaßt, welche sich um die Achse erstrecken, wobei die Spulen äußere Endwindungen (74D) aufweisen, welche durch eine Halterungseinrichtung (70), die auf der äußeren Ringstruktur (62) vorgesehen ist, festgehalten werden und innere Endwindungen (74C) aufweise, die durch eine Halteeinrichtung (66), die auf der inneren Ringstruktur vorgesehen ist, festgehalten werden, wobei die Vorrichtung umfaßt:

eine Klemmeinrichtung (140) zum Halten der inneren und der äußeren Ringstruktur in einer vorbestimmten, im wesentlichen koplaneren, relativ zueinander drehbaren und gegenseitig koaxialen Zuordnung auf einer vobestimmten Achse;

einen Drahtführungsflieger (128), der um eine Windungsachse parallel zu und beabstandet von der vorbestimmten Achse drehbar ist;

eine Einrichtung (124) zum Drehen des Fliegers um die Windungsachse;

eine Drahtführungsabschirmungseinrichtung (190, 218) zum Führen von aus dem Flieger austretendem Draht, wenn der Flieger gedreht wird, in den Eingriff sowohl mit der Halteeinrichtung für die inneren Spulenendwindungen als auch mit der Halteeinrichtung für die äußeren Spulenendwindungen und zum Abschirmen anderer Teile des Vorformrahmens gegen einen Eingriff durch den Draht, so daß eine Drahtspule auf dem Vorformrahmen gewunden wird, welche sich zwischen den Ringstrukturen erstreckende Seiten aufweist; und

eine Einrichtung (142) zum Drehen der Klemmenrichtung um die vorbestimmte Achse, so daß auf dem Vorformrahmen zusätzlich Drahtspulen an unterschiedlichen Stellen darauf gewunden werden können.

23. Eine Vorrichtung nach Anspruch 22, wobei die Klemmeinrichtung und die Ringstrukturen mit sich aneinander anpassenden Oberflächen (162, 172, 164, 174) zum Aufrechterhalten der vorbestimmten, relativen Drehposition zwischen den Ringstrukturen versehen ist.

24. Eine Vorrichtung nach Anspruch 22 oder 23, wobei die Klemmeinrichtung eine einen Ring (148) betätigende Welle (152) umfaßt, und die Einrichtung zum Drehen der Klemmeinrichtung eine Einrichtung zum Drehen der Ringschaltwelle umfaßt.

25. Eine Vorrichtung nach Anspruch 24, wobei der Ring in Relation zu der inneren Ringstruktur in Eingriff bringbar angebracht ist, und der Ring (148) in einem Ringgehäuse (160) angeordnet ist und die Klemmeinrichtung weiterhin mehrere Klemmglieder (168) umfaßt, welche verschwenkbar auf dem Gehäuse montiert sind und dazu vorgesehen sind, innenseitig zur äußeren Ringstruktur in Klemmeingriff zu treten.

26. Eine Vorrichtung nach Anspruch 25, wobei die Klemmglieder für den Klemmeingriff mit der äußeren Ringstruktur federbeaufschlagt sind und aus dem Klemmeingriff mit der äußeren Ringstruktur in Abhängigkeit von Bewegungen der Ringschaltwelle verschwenkt werden.

27. Eine Vorrichtung nach wenigstens einem der Ansprüche 22 bis 26 für die Herstellung einer Ankervorform, welche einen Kommutator (44) mit einer Vielzahl von Zungen (52), die innerhalb der Bohrungen der inneren Ringstruktur und koaxial dazu angeordnet sind, aufweist, und wobei die Spulen Endteile aufweisen, die mit den Kommutatorzungen verbunden sind, wobei die Drahtführungs-Abschirmeinrichtung (190, 218) dazu vorgesehen ist, den Draht so zu führen, daß die Drahtspule auf den Vorformrahmen gewunden wird, wobei sich die Endwindungen längs der inneren und äußeren Ringstrukturen erstrecken, und wobei die Drahtführungs- und Abschirmeinrichtung eine bewegliche Kommutatorabschirmeinrichtung (216) und eine Einrichtung (226), die in der Lage ist, die bewegliche Kommutatorabschirmeinrichtung zwischen dem Winden von Spulen zu bewegen, so daß Endteile der Spulen mit den Zungen durch eine Folge von Drehbewegungen des Fliegers (128) und der Klemmeinrichtung (140) verbunden werden können, enthält.

**Revendications**

1. Gabarit pour un dispositif dynamo-électrique à enroulement plat, comprenant une structure de bague extérieure (62) ayant une forme autoporteuse et étant sensiblement symétrique par rapport à un axe central, une structure de bague intérieure (6) sensiblement symétrique par rapport à cet axe central, située coaxialement à l'intérieur de la structure de bague extérieure et ayant une forme autoporteuse, les structures de bague intérieure et extérieure ayant des premières surfaces d'extrémité sensiblement coplanaires, et une pluralité d'enroulements de fil (74, 104) bobinés sur les structures de bague, ces enroulements comprenant des côtés s'étendant généralement radialement par rapport aux structures de bague et reposant contre et s'étendant entre les premières surfaces d'extrémités de celles-ci, aisi que des retours d'extrémité (74C, 74D, 104C, 104D) s'étendant généralement de façon circonférencielle par rapport aux structures de bague.

2. Induit selon la revendication 1, dans lequel les structures de bague intérieure et extérieure présentant chacune des oreilles (70) autour desquelles les enroulement sont bobinés.

3. Dispositif dynamo-électrique à enroulement plat comprenant un gabarit selon la revendication 1 et comprenant les structures de bague et les enroulements de celles-ci encapsulés dans une matrice en matériau constitué de résine (114).

4. Induit comprenant un dispositif selon la revendication 3 et un collecteur (44) disposé dans l'alésage de la structure de bague intérieure.

5. Induit selon la revendication 4, dans lequel les structures de bague intérieure et extérieure présentent chacune des oreilles (66, 70) autour desquelles des enroulements sont bobinés.

6. Induit selon la revendication 5, dans lequel les oreilles (70) sur la structure de bague extérieure se projettent vers l'extérieur depuis le structure de bague extérieure par rapport à l'axe des structures de bague.

7. Induit selon la revendication 6, dans lequel des retours d'extrémité extérieurs (74D, 104D) sont formés autour du rebord extérieur de la structure de bague extérieure et sont fixés sur des paires espacées des oreilles se projettant à partir de celle-ci.

8. Induit selon les revendications 5, 6 ou 7, dans lequel les oreilles (66) de la structure de bague intérieure comprennent des parties de surface faisant face de façon générale vers l'axe, les enroulements étant bobinés à partir de retours de fil passés autour d'une paire des oreilles sur la structure de bague extérieure et les parties de surface d'une paire des oreilles sur la structure de bague intérieure.

9. Induit selon la revendication 8, dans lequel les oreilles (66) sur la structure de bague intérieure sont en forme de crochet et forment avec la face adjacente de la structure de bague intérieure des gorges de réception de fil (68), et dans lequel les retours d'extrémité intérieurs (74C, 104C) sont situés sensiblement à l'intérieur des gorges.

10. Induit selon l'une quelconque des revendications 4 à 9, dans lequel la structure de bague extérieure présente un collerette circulaire (72) en contact avec les retours d'extrémité extérieurs des enroulements et évitant à ces retours d'extrémité extérieurs d'entrer dans le zone située entre les structures de bague.

11. Induit selon l'une quelconque des revendications 4 à 10, dans lequel les structures de bague comprennent chacune des éléments de corps généralement circulaires et formant une paroi mince.

12. Induit selon l'une quelconque des revendications 4 à 11, dans lequel les retours d'extrémité intérieurs s'étendent le long de la première surface d'extrémité de la structure de bague intérieure.

13. Induit selon la revendication 12, dans lequel les retours d'extrémité extérieurs s'étendent sur la périphérie extérieure et le long de la face arrière de la structure de bague extérieure.

14. Induit selon l'une quelconque des revendications 4 à 13, dans lequel les enroulement sont bobinés sous tension de sorte que chaque enroulement exerce une force tendant à tirer les structures de bague l'une vers l'autre.

15. Induit selon la revendication 14, dans lequel pour chacun de enroulements il existe un des enroulements qui est sensiblement diamétralement opposé, tendant à tirer les structures de bague ensemble selon des directions opposées.

16. Procédé de construction d'un gabarit pour un induit en disque plat selon la revendication 1, comprenant les étapes de:

fourniture d'une structure de bague intérieure et d'une structure de bague extérieure, chaque structure de bague ayant une forme autoporteuse et étant disposée de façon sensiblement symétrique par rapport à un axe central;

support des structures de bague de façon coaxiale entre elles et avec des premières surfaces d'extrémité respectives de celles-ci sensiblement coplanaires;

bobinage des enroulements de fil ayant des retours d'extrémité extérieurs adjacents à et venant en contact avec la structure de bague extérieure, des retours d'extrémité intérieurs adjacents à et venant en contact avec la structure de la bague intérieure, les retours d'extrémité s'étendant généralement de façon circonférencielle par rapport aux structures de bague, et les retours de côté s'étendant généralement radialement par rapport aux structures de bague et reposant contre et enjambant les premières surfaces d'extrémité de celles-ci.

17. Procédé selon la revendication 16, dans lequel, après que le bobinage de tous les enroulements a été effectué, les structures de bague intérieure et extérieure et les enroulements sont encapsulés dans un matrice en matériau constitué de résine.

18. Procédé selon les revendications 16 ou 17 comprenant en outre les étapes de:

positionnement d'un collecteur dans l'alésage de la structure de bague intérieure; et

connexion des parties d'extrémité des enroulements sur les segments du collecteur.

19. Procédé selon les revendications 16, 17 ou 18, dans lequel la structure de bague intérieure présente un moyen pour retinir les retours d'extrémité d'enroulement intérieurs (66) et dans lequel la structure de bague extérieure comprend un moyen pour retenir les retours d'extrémité d'enroulement extérieurs (70), et dans lequel le bobinage des enroulements comprend les étapes de:

mise en rotation d'une ailette de guidage de fil (128) autour d'un axe prédéterminé parallèle à et espacé de l'axe des structures de bague, et, pendant que l'ailette est en rotation, guidage du fil sortant de l'ailette en engagement avec à la fois le moyen pour retenir les retours d'extrémité d'enroulement intérieurs et le moyen pour retenir les retours d'extrémité d'enroulement extérieurs, tout en protégeant d'autres parties du cadre de gabarit pour éviter qu'elles soient mises en contact avec le fil de sorte qu'un enroulement de fil est bobiné en ayant un côté qui enjambe les structures de bague intérieure et extérieure; et

mise en rotation du moyen de fixation (140) et des structures de bague (62, 60) de sorte que des enroulements de fil complémentaires puissent êtré bobinés en différents endroits de celui-ci.

20. Procédé selon la revendication 19, dans lequel le moyen de protection (218) protège des autres parties de cadre de gabarit pendant le bobinage d'un enroulement, au moins une partie du moyen de protection est déplacée après le bobinage de chaque enroulement pour dégager au moins l'un des crochets (52) prévu sur le collecteur, de sorte que le fil sortant de l'ailette puisse être connecté sur l'un des crochets et que le fil soit connecté sur le crochet par une série de mouvements de rotation de l'ailette (128) et du moyen de fixation (140).

21. Procédé selon la revendication 20, dans lequel le fil est connecté à chacun des crochets (52) en étant enroulé autour du lui.

22. Dispositif de bobinage d'enroulement destiné à être utilisé dans la construction d'un gabarit pour un dispositif dynamo-électrique selon la revendication 1, le gabarit ayant un cadre comprenant une structure de bague intérieure (60) et une structure de bague extérieure (62), les structures de cadre étant espacées entre elles et ayant un axe commun, et une pluralité d'enroulements (74, 104) s'étendant autour de l'axe les enroulements ayant des retours d'extrémité extérieurs (74D) retenus par un moyen de retenue (70) disposé sur la structure de bague extérieure (62) et des retours d'extrémité intérieurs (74C) retenus par un moyen de retenue (66) disposé sur la structure de bague intérieure, le dispositif comprenant;

un moyen de fixation (140) pour supporter les structures de bague intérieure et extérieure dans un position en rotation relative prédéterminée et sensiblement coplanaire, et de façon coaxiale entre elles et par rapport à un axe prédéterminé;

une ailette de guidage de fil (128) pouvant tourner autour d'un axe de bobinage parallèle à et espacé de l'axe prédéterminé;

un moyen (124) pour faire tourner l'ailette autour de l'axe de bobinage;

un moyen de protection et de guidage de fil (190, 218) pour guider le fil sortant de l'ailette, lorsque l'ailette tourne pour sa mise en contact à la fois avec un moyen de retenue des retours d'extrémité d'enroulement intérieure et le moyen de retenue des retours d'extrémité d'enroulement extérieurs, et pour protéger d'autres parties du cadre de gabarit pour éviter leur mise en contact avec le fil, de sorte qu'un enroulement de fil soit bobiné sur le cadre de gabarit en ayant de côtés enjambant les structures de bague; et

un moyen (142) pour faire tourner le moyen de fixation autour de l'axe prédéterminé de sorte que les enroulements de fil complémentaires puissent être bobinés sur le cadre de gabarit selon différentes positions sur celui-ci.

23. Dispositif selon la revendication 22, dans lequel le moyen de fixation et les structures de bague sont agencées avec des surfaces s'interpénétrant (162, 172, 164, 174) afin de maintenir les positions relatives en rotation prédéterminées entre les structures de bague.

24. Dispositif selon les revendications 22 et 23, dans lequel le moyen de fixation comprend un arbre d'actionnement (152) de douille (148) et dans lequel le moyen pour faire tourner le moyen de fixation comprend un moyen pour faire tourner l'arbre d'actionnement de douille.

25. Dispositif selon la revendication 24, dans lequel la douille est fixée par rapport à la structure de bague intérieure en pouvant venir en contact avec elle, la douille (148) étant située dans un carter de douille (160) et dans lequel le moyen de fixation comprend en outre plusieurs éléments de fixation (168) montés de façon pivotante sur le carter et adaptés de façon à venir en contact à l'intérieur de la structure de bague extérieure pour le saisir.

26. Dispositif selon la revendication 25, dans lequel les éléments de fixation sont poussés par un ressort dans une position de fixation sur la structure de bague extérieure et sont pivotés pour libérer la fixation de la structure de bague extérieure en réponse à des mouvements de l'arbre d'actionnement de douille.

27. Dispositif selon l'une quelconque des revendications 22 à 26, destiné à la fabrication d'un gabarit d'induit ayant un collecteur (44) muni d'une pluralité de crochets (52) disposés à l'intérieur de l'alésage de la structure de bague intérieure et coaxiaux avec celle-ci, et les enroulements ayant des parties d'extrémité connectées sur les crochets de collecteur, dans lequel le moyen de protection et de guidage de fil (140, 218) est disposé de façon à guider le fil de sorte que l'enroulement de fil soit bobiné sur le cadre de gabarit en ayant les retours d'extrémité s'étendant le long des structures de bague intérieure et extérieure, et dans lequel le moyen de protection et de guidage de fil comprend un moyen de protection de collecteur déplaçable (296) et un moyen (226) pouvant opérer pour déplacer le moyen de protection de collecteur déplaçable entre le bobinage des enroulements, de sorte que les parties d'extrémité des enroulements puissent être connectées aux crochets par une succession de mouvements de rotation de l'ailette (128) et du moyen de fixation (140).

EP 0 174 870 B1

FIG-1

FIG-2

MACHINE CONTROL

DEREELER

WIRE SUPPLY

FIG-7

1

FIG-6

FIG-5

FIG-3

FIG-4

EP 0 174 870 B1

FIG-8

FIG-9

3

FIG-IO

FIG-II

FIG-I2

FIG-I3

FIG-I4

FIG-I5

FIG-16

FIG-17

FIG-18

FIG-19

FIG-20

FIG-21

FIG-22

FIG-23

FIG-24

FIG-25

FIG-26

FIG-27